# EUROPÄISCHE PATENTSCHRIFT

(11) **EP 3 456 227 B1**
(45) Veröffentlichungstag und Bekanntmachung des Hinweises auf die Patenterteilung: **22.02.2023**
(21) Anmeldenummer: 18190531.6
(22) Anmeldetag: 23.08.2018
(51) Int. Cl.: A47K 3/00

(54) **SCHNITTSCHUTZBAND UND INSTALLATIONSANORDNUNG HIERMIT**
CUT PROTECTION STRAP AND INSTALLATION ASSEMBLY USING THE SAME
BANDE DE PROTECTION CONTER LES COUPURES ET ENSEMBLE D'INSTALLATION CORRESPONDANT

(30) Priorität: 15.09.2017 DE 202017105596 U
(43) Veröffentlichungstag der Anmeldung: 20.03.2019
(73) Patentinhaber: Oxiegen GmbH, 33175 Bad Lippspringe (DE)
(72) Erfinder: Watermann, Heinfried, 33175 Bad Lippspringe (DE)
(74) Vertreter: Wickord, Wiro

(56) Entgegenhaltungen:
- EP-A1- 3 372 131
- WO-A1-2008/046476
- DE-A1-102006 003 076
- DE-A1-102015 104 599
- DE-A1-102016 124 453

## Beschreibung

Die Erfindung betrifft ein Schnittschutzband für Dichtbänder, Folien oder andere Dichtschichten sowie eine das Schnittschutzband aufweisende Installationsanordnung für wasserbelastete Bereiche in Bädern, Küchen und dergleichen.

Mit flexiblen Fugenmassen verschlossene Anschlussfugen im Fliesenbau gelten als Wartungsfugen, die beispielsweise aufgrund von Alterungseffekten von Zeit zu Zeit erneuert werden müssen. Im Rahmen der Erneuerung wird die Fugenmasse typischerweise aus der Fuge herausgeschnitten, sodass die Fuge danach erneut verfugt werden kann. Liegen diese Fugen in wasserbelasteten Bereichen von Bädern, Küchen und dergleichen, beispielsweise an Duschen, so liegt hinter den Fugen eine Dichtschicht und/oder ein Dichtband der unter dem als Wand- und/oder Bodenbelag dienenden Fliesen ausgeführten Abdichtung. Beim Herausschneiden der zu entfernenden Fugenmasse kommt es daher immer wieder zum Durchtrennen der Dichtbänder beziehungsweise der Dichtschicht und in der Folge zu Undichtigkeiten. Die Undichtigkeiten können erhebliche Schäden verursachen und sollen unbedingt vermieden werden. Aus diesem Grund wird zunehmend ein Schnittschutz gefordert, der das Dichtband beziehungsweise die Dichtschicht vor Beschädigung beim Erneuern der flexiblen Fugenmasse schützt. Als Schnittschutz werden heute vereinzelt Bänder aus einem Edelstahlgewebe verwendet. Diese haben jedoch den Nachteil, dass sie sehr steif sind und die Verarbeitung insofern aufwendig ist.

Die DE 10 2016 124 453 A1 gibt ein Schnittschutzband sowie eine Verwendung und ein Verfahren zum Anbringen des Schnittschutzbands an. Das Schnittschutzband weist eine Tragschicht aus einem schnittfesten Textil und eine streifenförmige Klebeschicht an einer ersten Flachseite der Tragschicht auf. Weiter ist hierbei ein Längsrand des Schnittschutzbands aus einem Vliesmaterial ausgebildet.

Ein Schnittschutzband der gattungsgemäßen Art und eine Installationsanordnung hierfür sind in der EP 3 372 131 A1 offenbart. Das Schnittschutzband umfasst eine Tragschicht, die einzig in einem annähernd mittleren Bereich einen Schnittschutzstreifen aus einem schnittfesten Textil vorsieht. Das Schnittschutzband umfasst an einer ersten Flachseite der Tragschicht eine Klebeschicht und an einer der ersten Flachschicht gegenüberliegenden zweiten Flachseite eine Schutzschicht.

Aufgabe der vorliegenden Erfindung ist es insofern, einen geeigneten Schnittschutz und eine den Schnittschutz aufweisende Installationsanordnung anzugeben.

Zur Lösung der Aufgabe weist die Erfindung die Merkmale des Patentanspruchs 1 auf.

Der besondere Vorteil der Erfindung besteht darin, dass durch das erfindungsgemäße Schnittschutzband eine Beschädigung des Dichtbands beziehungsweise der Dichtschicht beim Austausch der flexiblen Fugenmasse zuverlässig vermieden werden kann. Es ist insbesondere so, dass das schnittfeste Textil der Tragschicht verhindert, dass das Messer oder ein anderes zum Herausschneiden der flexiblen Fugenmasse aus der Fuge benutztes Werkzeug mit der Dichtschicht beziehungsweise den Dichtbändern in Kontakt tritt und diese beschädigt beziehungsweise durchtrennt. Die Schutzschicht aus dem Vliesmaterial hat hierbei die Aufgabe zu verhindern, dass ein zur Befestigung eines Wand- beziehungsweise Bodenbelags vorgesehener Kleber das schnittfeste Textil in unzulässiger Weise benetzt beziehungsweise durchtränkt. Die Schutzschicht verhindert insofern, dass die Tragschicht nach dem Aushärten des Klebers erstarrt und mit dem Messer beziehungsweise Werkzeug durchtrennt werden kann mit der Folge, dass die dahinter liegende Dichtschicht beziehungsweise die Dichtbänder beschädigt werden. Dabei erlaubt es die Verwendung des schnittfesten Textils zugleich, ein Schnittschutzband mit einer sehr guten Flexibilität bereitzustellen. Es ist insofern für das erfindungsgemäße Schnittschutzband die Verarbeitung vereinfacht. Die Klebeschicht des erfindungsgemäßen Schnittschutzbands, welche auf einer der Schutzschicht gegenüberliegenden Flachseite der Tragschicht vorgesehen ist, dient zum leichten und schnellen Befestigen des erfindungsgemäßen Schnittschutzbands an der Dichtschicht beziehungsweise den Dichtbändern.

Nach einer bevorzugten Ausführungsform der Erfindung ist zum Verbinden der Tragschicht mit der Schutzschicht zwischen ebendiesen ein Kleber vorgesehen. Vorteilhaft kann das Schnittschutzband durch das Vorsehen des Klebers zum Verbinden der Schichten sehr kostengünstig hergestellt werden.

Nach einer Weiterbildung der Erfindung ist für die Tragschicht ein hochfest gestricktes Textil vorgesehen. Vorteilhaft verbessert sich die Schutzwirkung durch die Verwendung des hochfest gestrickten Textils weiter.

Nach einer Weiterbildung der Erfindung sieht die Tragschicht ein Polyethylen-Textil vor. Das Polyethylen-Textil ist zum einen sehr widerstandsfähig und zum anderen kostengünstig und langlebig.

Nach einer Weiterbildung der Erfindung wird für das Textil eine synthetische Chemiefaser auf Basis von Polyethylen mit einer ultrahohen molaren Masse verwendet. Beispielsweise wird für das Textil eine Dyneema-Faser verwendet und die Schnittfestigkeit und Widerstandsfähigkeit weiter erhöht.

Nach der Erfindung ist das schnittfeste Textil als ein Gewebe ausgebildet und sieht einen quer zu einer Längserstreckungsrichtung des Schnittschutzbands liegenden Edelstahlfaden vor. Vorteilhaft erhöht sich die Widerstandsfähigkeit des Schnittschutzbands durch die Verwendung des Edelstahlfadens weiter. Da der Edelstahlfaden quer zur Längserstreckungsrichtung orientiert ist, bleibt die Flexibilität des Schnittschutzbands erhalten beziehungsweise das Schnittschutzband ist bezogen auf die Längserstreckungsrichtung biegeschlag und/oder elastisch ausgebildet.

Nach einer Weiterbildung der Erfindung überdeckt eine abziehbare Folie die auf der ersten Flachseite der Tragschicht vorgesehene Klebeschicht. Vorteilhaft kann durch Abziehen der Folie die Klebeschicht freigelegt werden. Das erfindungsgemäße Schnittschutzband lässt sich dann sehr leicht montieren. Zugleich ist durch das Vorsehen der abziehbaren Folie beim Aufwickeln des Schnittschutzbands beziehungsweise beim Bevorraten desselben auf einer Rolle sichergestellt, dass die Klebeschicht nicht beschädigt wird beziehungsweise die Klebeschicht nicht an der Schutzschicht anhaftet.

Zur Lösung der Aufgabe weist die Erfindung die Merkmale des Patentanspruchs 7 auf.

Der besondere Vorteil der Erfindung besteht darin, dass ein Austausch der flexiblen Fugenmasse der erfindungsgemäßen Installationsanordnung durch das Vorsehen des Schnittschutzbands durchgeführt werden kann, ohne dass die Dichtschicht beziehungsweise die Zwischenschicht beim Aufschneiden der Fuge beschädigt wird. Folgeschäden, welche durch Undichtigkeiten der Dichtschicht beziehungsweise der Zwischenschicht nach dem Aufarbeiten der mit der Fugenmasse gefüllten Wartungsfuge auftreten können, werden insofern bei der erfindungsgemäßen Installationsanordnung vermieden. Die Zwischensicht ist beispielsweise durch ein auf die Dichtschicht aufgebrachtes Dichtband gebildet.

Nach einer bevorzugten Ausführungsform der Erfindung stehen die Schutzschicht des erfindungsgemäßen Schnittschutzbands und der zum Festlegen des Wand- und/oder Bodenbelags verwendete Kleber in Kontakt. Die Schutzschicht verhindert insofern, dass der Kleber mit der Tragschicht des Schnittschutzbands in Kontakt kommt und das schnittfeste Textil beim Kontakt mit dem Kleber nach dem Aushärten desselben starr wird. Die textilen Eigenschaften der Tragschicht bleiben insofern zuverlässig erhalten mit der Folge, dass einer Durchtrennung des Schnittschutzbands mittels eines Messers oder eines anderen Werkzeugs dauerhaft vorgebeugt ist.

Nach der Erfindung sieht das schnittfeste Textil der Tragschicht des Schnittschutzbands den quer liegenden Edelstahlfaden vor. Die Fuge des Wand- und/oder Bodenbelags erstreckt sich hierbei im Wesentlichen horizontal und/oder rechtwinklig zu dem quer liegenden Edelstahlfaden des schnittfesten Textils. Vorteilhaft verbessert sich die Widerstandsfähigkeit des Textils durch das Vorsehen des Edelstahlfadens weiter. Seine Orientierung quer zur Fugenlängsrichtung stellt dabei sicher, dass das Messer beziehungsweise das Werkzeug beim Herausschneiden der flexiblen Fugenmasse nicht zwischen dem Edelstahlfaden hindurchtreten kann.

Der Edelstahlfaden ist nach der Erfindung mäanderförmig in Schlaufen verlegt. Insbesondere kann vorgesehen sei, dass der Edelstahlfaden an den Längsseiten des Schnittschutzbands nicht zugeschnitten ist mit der Folge, dass spitze Kante vermieden werden und einer Beschädigung der Dichtschicht beziehungsweise der Dichtbänder durch den Edelstahlfaden vorgebeugt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Schnittschutzbands gelten selbstverständlich auch im Zusammenhang mit der erfindungsgemäßen Installationsanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine Schnittdarstellung durch ein erfindungsgemäßes Schnittschutzband,
- Fig. 2: eine Prinzipdarstellung einer ersten Ausführungsform einer erfindungsgemäßen Installationsanordnung mit dem Schnittschutzband nach Fig. 1 und
- Fig. 3: eine zweite Ausführungsform der erfindungsgemäßen Installationsanordnung mit dem Schnittschutzband nach Fig. 1 in einer Prinzipdarstellung.

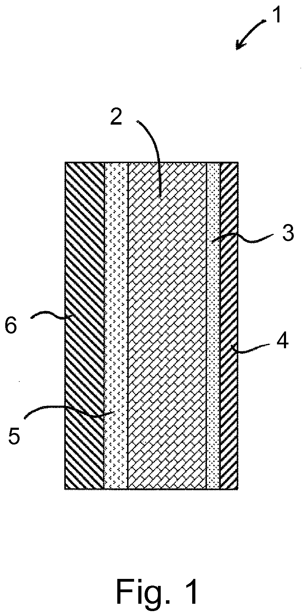

Fig. 1 zeigt ein erfindungsgemäßes Schnittschutzband 1 im Querschnitt. Es sieht zunächst eine Tragschicht 2 aus einem schnittfesten Textil sowie eine Schutzschicht 6 und eine Klebeschicht 3 vor. Die Klebeschicht 3 ist im Bereich einer ersten Flachseite der Tragschicht 2 an ebendieser vorgesehen. Zum Abdecken der Klebeschicht 3 sieht das Schnittschutzband 1 eine Abziehfolie 4 vor, welche die Klebeschicht 3 auf der ersten Flachseite überdeckt. Die Schutzschicht 6 ist auf einer der ersten Flachseite gegenüberliegenden zweiten Flachseite der Tragschicht 2 ausgebildet. Zwischen der Tragschicht 2 und der Schutzschicht 6 ist zum Verbinden der Schichten 2, 6 ein Kleber 5 in Form einer Zwischenschicht vorgesehen.

Die Darstellung des erfindungsgemäßen Schnittschutzbands 1 im Querschnitt nach Fig. 1 ist allein exemplarisch zu verstehen. Es ist insofern die Dicke der einzelnen Schichten nicht maßstabsgetreu gewählt. Insbesondere ist die Tragschicht 2 verglichen zu allen anderen Schichten dick ausgebildet und nach einer bevorzugten Ausführungsform der Erfindung dicker als die anderen Schichten 3, 4, 5, 6 zusammen. Die Klebeschicht 3 ist ebenso wie die Abziehfolie 4 dünn realisiert. Die aus einem Vliesmaterial gebildete Schutzschicht 6 ist ebenfalls dünn im Vergleich zur Dicke der Tragschicht 2. Ebenso ist der Kleber 5 zum Verbinden der Tragschicht 2 mit der Schutzschicht 6 dünn aufgetragen.

Das erfindungsgemäße Schnittschutzband 1 ist als Band lang ausgebildet und beispielsweise auf einer Rolle bevorratet. Eine Länge des Schnittschutzbands 1 ist um ein Vielfaches größer als eine Dicke desselben und/oder eine Höhe. Beispielsweise beträgt die Dicke wenige Millimeter und die Höhe des erfindungsgemäßen Schnittschutzbands liegt nach den Erfordernissen der jeweiligen Applikation im Bereich von 15 mm bis 50 mm. Eine Länge des Schnittschutzbands 1 kann beispielsweise 10 m oder mehr betragen.

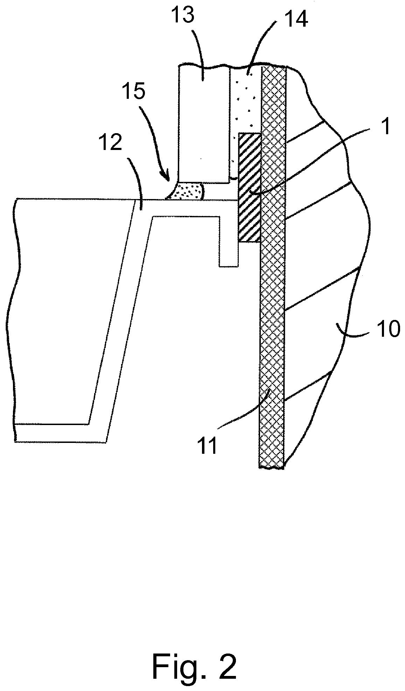

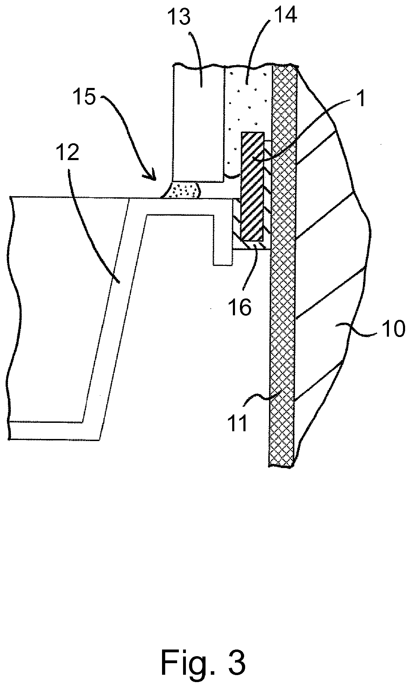

Die Fig. 2 und 3 zeigen voneinander verschiedene Ausführungsbeispiele der erfindungsgemäßen Installationsanordnung. Gleiche oder gleichwirkende Bauteile sind mit gleichen Bezugszeichen bezeichnet. Es werden lediglich die Unterscheidungsmerkmale des auf das erste Ausführungsbeispiel folgenden zweiten Ausführungsbeispiels zu dem ersten Ausführungsbeispiel erläutert. Im Übrigen stimmen die Ausführungsbeispiele überein.

Ein erstes Ausführungsbeispiel der das erfindungsgemäße Schnittschutzband 1 aufweisende erfindungsgemäße Installationsanordnung ist in Fig. 2 gezeigt. Nach der erfindungsgemäßen Installationsanordnung ist hier vorgesehen, dass an einer Wand 10 eine Dichtschicht 11 ausgebildet ist und dass auf der Dichtschicht 11 mittels eines Klebers 14 Fliesen 13 festgelegt sind zur Bildung eines Wandbelags. Ebenso ist vorgesehen, dass eine Duschwanne 12 unterhalb der Fliesen 13 installiert ist. Beispielsweise ist die Dichtschicht 11 durch eine Folie gebildet.

Der Wandbelag weist im Übergangsbereich zu der Wanne 12 eine Wartungsfuge auf, in der eine flexible Fugenmasse 15 vorgesehen ist. Um im Rahmen von Wartungsarbeiten die flexible Fugenmasse 15 aus der Wartungsfuge herausschneiden zu können, ohne dabei mit dem Messer beziehungsweise Werkzeug die hinter der Wartungsfuge gebildete Dichtschicht 11 zu beschädigen, ist im Bereich der Wartungsfuge auf der Dichtschicht 11 das erfindungsgemäße Schnittschutzband 1 vorgesehen. Hierbei ist das Schnittschutzband 1 mit der Klebeschicht 3 an die Dichtschicht 11 angesetzt und die Schutzschicht 6 des Schnittschutzbands 1 ist in Richtung des Wandbelags beziehungsweise der Wanne 12 orientiert. Der zum Befestigen der Fliesen 13 verwendete Kleber 14 benetzt dabei die Schutzschicht 6 das Schnittschutzband 1.

Wird nunmehr bei der erfindungsgemäßen Installationsanordnung die flexible Fugenmasse 15 aus der Wartungsfuge herausgeschnitten, kann ein nicht dargestelltes Messer nur bis zu dem Schnittschutzband 1 eindringen. Das Schnittschutzband 1 ist so widerstandsfähig ausgebildet, dass das Messer die Trägerschicht 2 nicht durchtrennen kann und insofern einer Beschädigung der bezogen auf die Wartungsfuge hinter dem Schnittschutzband 1 vorgesehenen Dichtschicht 11 zuverlässig vorgebeugt ist. Die Tragschicht 2 ist dabei aus einem schnittfesten Textil und bevorzugt aus einem hochfest gestrickten Textil auf Polyethylen-Basis gebildet. Beispielsweise wird eine synthetische Chemiefaser mit einer ultrahohen molaren Masse für das Textil verwendet.

Nach einer zweiten Ausführungsform sieht die erfindungsgemäße Installationsanordnung zusätzlich eine Zwischenschicht 16 vor, welche das Schnittschutzband 1 abschnittsweise umgreift. Die Zwischenschicht 16 ist insofern an die Dichtschicht 11 einerseits und an einem Rand der Wanne 12 andererseits so angelegt, dass das Schnittschutzband 1 mit der Klebeschicht 3 auf die Zwischenschicht 16 aufgebracht ist. Die Zwischenschicht 16 kann insbesondere an der Dichtschicht 11 anhaften. Beispielsweise kann ein Kleber zum Anbringen der Zwischenschicht 16 an der Dichtschicht 11 vorgesehen sein. Beispielsweise kann die Zwischenschicht 16 durch ein Dichtband gebildet werden.

### Bezugszeichenliste

- 1: Schnittschutzband
- 2: Tragschicht
- 3: Klebeschicht
- 4: abziehbare Folie
- 5: Kleber
- 6: Schutzschicht
- 10: Wand
- 11: Dichtschicht
- 12: Wanne
- 13: Fliese
- 14: Kleber
- 15: flexible Fugenmasse
- 16: Zwischenschicht

## Patentansprüche

1. Schnittschutzband (1) für Dichtbänder und/oder Folien mit einer Tragschicht (2) aus einem schnittfesten Textil, mit einer Klebeschicht (3), die auf einer ersten Flachseite der Tragschicht (2) vorgesehen ist, und mit einer der Tragschicht (2) zugeordneten Schutzschicht (6) aus einem Vliesmaterial, wobei das schnittfeste Textil als ein Gewebe ausgebildet ist, **dadurch gekennzeichnet, dass** die Schutzschicht (6) auf einer der ersten Flachseite gegenüberliegenden zweiten Flachseite der Tragschicht (2) zugeordnet ist, und dass das Gewebe einen quer zu einer Längserstreckungsrichtung des Schnittschutzbands (1) liegenden Edelstahlfaden vorsieht, welcher in mäanderförmigen Schlaufen verlegt ist.

2. Schnittschutzband (1) nach Anspruch 1, **dadurch gekennzeichnet, dass** zwischen der Tragschicht (2) und der Schutzschicht (6) ein Kleber (5) vorgesehen ist zum Verbinden der Schichten (2, 6).

3. Schnittschutzband (1) nach Anspruch 1 oder 2, **dadurch gekennzeichnet, dass** für die Tragschicht (2) ein hochfest gestricktes Textil vorgesehen ist.

4. Schnittschutzband (1) nach einem der Ansprüche 1 bis 3, **dadurch gekennzeichnet, dass** die Tragschicht (2) ein Polyethylen-Textil vorsieht.

5. Schnittschutzband (1) nach Anspruch 4, **dadurch gekennzeichnet, dass** für das Textil eine synthetische Chemiefaser auf Basis von Polyethylen mit einer ultrahohen molaren Masse vorgesehen ist.

6. Schnittschutzband (1) nach einem der Ansprüche 1 bis 5, **dadurch gekennzeichnet, dass** die auf der ersten Flachseite der Tragschicht (2) vorgesehene Klebeschicht (3) mittels einer abziehbaren Folie (4) überdeckt ist.

7. Installationsanordnung für wasserbelastete Bereiche in Bädern, Küchen und dergleichen umfassend
- eine wand- und/oder bodenmontierte Dichtschicht (11),
- ein an der Dichtschicht (11) und/oder einer auf der Dichtschicht (11) vorgesehenen Zwischenschicht (16) mittels der Klebeschicht (3) befestigtes Schnittschutzband (1) nach einem der Ansprüche 1 bis 5,
- einen das Schnittschutzband (1) jedenfalls abschnittsweise überdeckenden Wand- und/oder Bodenbelag mit einer im Bereich des Schnittschutzbands (1) vorgesehenen Fuge, wobei der Wand- und/oder Bodenbelag mittels eines rückseitig hieran vorgesehenen Klebers (14) befestigt ist, und
- eine flexible, in die Fuge eingebaute Fugenmasse (15),
wobei sich die Fuge des Wand- und/oder Bodenbelags im Wesentlichen horizontal und/oder rechtwinklig zu dem quer zu der Längserstreckungsrichtung des Schnittschutzbands (1) liegenden Edelstahlfaden erstreckt.

8. Installationsanordnung nach Anspruch 7, **dadurch gekennzeichnet, dass** die Schutzschicht (6) des Schnittschutzbands (1) mit dem Kleber (14) für den Wand- und/oder Bodenbelag in Kontakt steht.

9. Installationsanordnung nach Anspruch 7 oder 8, **dadurch gekennzeichnet, dass** das Schnittschutzband (1) mittels der an der ersten Flachseite der Tragschicht (2) vorgesehenen Klebeschicht (3) an der Dichtschicht (11) und/oder der Zwischenschicht (16) festgelegt ist.

## Claims

1. Cut protection strip (1) for sealing tapes and/or films, comprising a carrier layer (2) consisting of a cut-proof textile, comprising an adhesive layer (3) provided on a first flat face of the carrier layer (2), and comprising a protective layer (6) assigned to the carrier layer (2) and consisting of a non-woven material, the cut-proof textile being formed as a fabric, **characterised in that** the protective layer (6) is assigned to the carrier layer (2) on a second flat face opposite the first flat face, and **in that** the fabric provides a stainless steel thread, which is positioned transverse to a longitudinal extension direction of the cut protection strip (1) and is laid in meander-shaped loops.

2. Cut protection strip (1) according to claim 1, **characterised in that** an adhesive (5) is provided between the carrier layer (2) and the protective layer (6) to connect the layers (2, 6).

3. Cut protection strip (1) according to either claim 1 or claim 2, **characterised in that** a textile knitted for high strength is provided for the carrier layer (2).

4. Cut protection strip (1) according to any of claims 1 to 3, **characterised in that** the carrier layer (2) provides a polyethylene textile.

5. Cut protection strip (1) according to claim 4, **characterised in that** a synthetic chemical fibre based on ultra-high molar mass polyethylene is provided for the textile.

6. Cut protection strip (1) according to any of claims 1 to 5, **characterised in that** the adhesive layer (3) provided on the first flat face of the carrier layer (2) is covered by means of a detachable film (4).

7. Installation arrangement for high-moisture regions in baths, kitchens and the like, comprising
- a wall- and/or floor-mounted sealing layer (11),
- a cut protection strip (1) according to any of claims 1 to 5, fixed, by means of the adhesive layer (3), to the sealing layer (11) and/or to an intermediate layer (16) provided on the sealing layer (11),
- a wall and/or floor cover, covering the cut protection strip (1) at least in portions and comprising a joint provided in the region of the cut protection band (1), the wall and/or floor cover being fixed by means of an adhesive (14) provided on the rear face thereof, and
- a flexible sealant (15) integrated into the joint,
wherein the joint of the wall and/or floor cover extends substantially horizontal and/or perpendicular to the stainless steel thread positioned transverse to the longitudinal extension direction of the cut protection strip (1).

8. Installation arrangement according to claim 7, **characterised in that** the protective layer (6) of the cut protection strip (1) is in contact with the adhesive (14) for the wall and/or floor cover.

9. Installation arrangement according to either claim 7 or claim 8, **characterised in that** the cut protection strip (1) is fixed to the sealing layer (11) and/or to the intermediate layer (16) by means of the adhesive layer (3) provided on the first flat face of the carrier layer (2).

## Revendications

1. Bande de protection contre la coupure (1) pour des bandes d'étanchéité et/ou des films, avec une couche de support (2) en un textile résistant à la coupure, avec une couche adhésive (3) qui est prévue sur un premier côté plat de la couche de support (2) et avec une couche de protection (6) en un matériau non tissé associée à la couche de support (2), le textile résistant à la coupure étant réalisé sous la forme d'un tissu, **caractérisée en ce que** la couche de protection (6) est associée à un deuxième côté plat de la couche de support (2), opposé au premier côté plat, et **en ce que** le tissu prévoit un fil d'acier inoxydable situé transversalement à une direction d'extension longitudinale de la bande de protection contre la coupure (1), lequel est posé en boucles en forme de méandres.

2. Bande de protection contre la coupure (1) selon la revendication 1, **caractérisée en ce qu'**un adhésif (5) est prévu entre la couche de support (2) et la couche de protection (6) pour relier les couches (2, 6).

3. Bande de protection contre la coupure (1) selon la revendication 1 ou 2, **caractérisée en ce qu'**un textile tricoté à haute résistance est prévu pour la couche de support (2).

4. Bande de protection contre la coupure (1) selon l'une des revendications 1 à 3, **caractérisée en ce que** la couche de support (2) prévoit un textile en polyéthylène.

5. Bande de protection contre la coupure (1) selon la revendication 4, **caractérisée en ce qu'**il est prévu pour le textile une fibre chimique synthétique à base de polyéthylène ayant une masse molaire ultra-élevée.

6. Bande de protection contre la coupure (1) selon l'une des revendications 1 à 5, **caractérisée en ce que** la couche adhésive (3) prévue sur le premier côté plat de la couche de support (2) est recouverte d'un film pelable (4).

7. Agencement d'installation pour des zones exposées à l'eau dans les salles de bains, les cuisines et analogues, comprenant :
- une couche d'étanchéité (11) montée sur le mur et/ou le sol,
- une bande de protection contre la coupure (1) selon l'une des revendications 1 à 5 fixée sur la couche d'étanchéité (11) et/ou sur une couche intermédiaire (16) prévue sur la couche d'étanchéité (11) au moyen de la couche adhésive (3),
- un revêtement de mur et/ou de sol recouvrant au moins sur certaines parties la bande de protection contre la coupure (1), avec un joint prévu dans la zone de la bande de protection contre la coupure (1), le revêtement de mur et/ou de sol étant fixé au moyen d'un adhésif (14) prévu au dos de celui-ci, et
- une matière de jointoiement (15) flexible, insérée dans le joint,
le joint du revêtement de mur et/ou de sol s'étendant sensiblement horizontalement et/ou orthogonalement au fil d'acier inoxydable situé transversalement à la direction d'extension longitudinale de la bande de protection contre la coupure (1).

8. Agencement d'installation selon la revendication 7, **caractérisé en ce que** la couche de protection (6) de la bande de protection contre la coupure (1) est en contact avec l'adhésif (14) pour le revêtement de mur et/ou de sol.

9. Agencement d'installation selon la revendication 7 ou 8, **caractérisé en ce que** la bande de protection contre la coupure (1) est fixée sur la couche d'étanchéité (11) et/ou sur la couche intermédiaire (16) au moyen de la couche adhésive (3) prévue sur le premier côté plat de la couche de support (2).
